# EUROPEAN PATENT SPECIFICATION

(11) **EP 3 213 996 B1**
(45) Date of publication and mention of the grant of the patent: **18.08.2021**
(21) Application number: 17158450.1
(22) Date of filing: 28.02.2017
(51) Int. Cl.: B60Q 3/46, G09F 19/18, G03B 29/00, B64D 47/02, B64C 25/00, G09F 21/10

(54) **AIRCRAFT MOUNTED DISPLAY MODULE**
FLUGZEUG MIT EXTERNER BILDPROJEKTION
AVION AVEC PROJECTION DES IMAGES EXTERNES

(30) Priority: 02.03.2016 IN 201611007417
(43) Date of publication of application: 06.09.2017
(73) Proprietor: Goodrich Lighting Systems, Inc., Oldsmar, FL 34677 (US)
(72) Inventor: WALKE, Nilesh R., 421301 Kalyan West (IN); PATEL, Amar, 560100 Bangalore (IN)
(74) Representative: Dehns

(56) References cited:
- EP-A2- 2 549 329
- BE-A- 410 031
- FR-A1- 3 002 360
- US-A- 1 709 620
- US-A1- 2012 212 712
- US-A1- 2015 172 611

## Description

### BACKGROUND

The subject matter disclosed herein relates to aircraft. More specifically, the present disclosure relates to informational displays projected onto aircraft surfaces.

It has recently become more common to see advertisements and other informational messages on articles related to commercial aircraft travel. Advertisements and other messages can now be commonly found on boarding passes, security tags, luggage tags, inflight entertainment systems, and the like. Some aircraft operators have gone to the extent of painting portions of the aircraft structure, such as the wings, vertical tail or underside of the fuselage with commercial images or advertisements. This takes advantage of typically unused space to enhance aircraft operator revenues. Such painted images, however are fixed in nature and expensive, time consuming and hazardous to apply and replace. Further, such images typically cannot be viewed at night. The art would well receive solutions to take better advantage of such spaces for commercial advertisement images or messages.

Display systems are disclosed in US 2015/172611 and FR 3002360.

### SUMMARY

In one aspect, an aircraft is provided as defined by claim 1.

Additionally, in this or other embodiments the image is one of a static image or a dynamic image.

Additionally, in this or other embodiments the one or more exterior surfaces are viewable from ground level during normal flight operations of the aircraft.

Additionally, in this or other embodiments the one or more exterior surfaces are one or more of wing surfaces or fuselage surfaces.

Additionally, in this or other embodiments the projector is operably connected to an aircraft electrical system.

Additionally, this or other embodiments the projector is operably connected to a projector power source independent of an aircraft electrical system.

As an example, the one or more images include one or more commercial advertisements.

Additionally, in this or other embodiments the one or more images are changeable during operation of the aircraft.

Additionally, in this or other embodiments the projector is a laser projector.

In another aspect, a method of displaying a projected image on an aircraft surface is provided as defined by claim 10.

Additionally, in this or other embodiments the projected image is changed during operation of the aircraft.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic view of an underside of an embodiment of an aircraft;
FIG. 2 is another schematic view of an underside of an aircraft;
FIG. 3 is a perspective view of an embodiment of a landing gear assembly for an aircraft;
FIG. 4 is another perspective view a portion of a landing gear assembly for an aircraft; and
FIG. 5 is a partial view of an interior wall of an aircraft.

### DETAILED DESCRIPTION

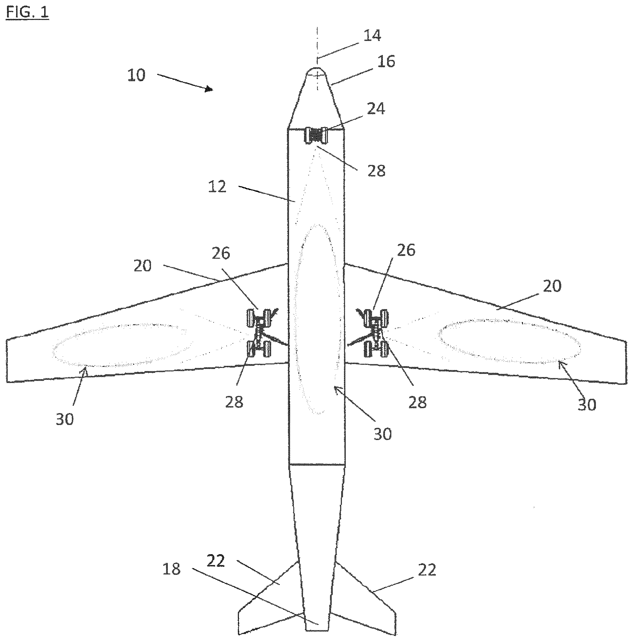

Shown in FIG. 1 is a schematic view of an aircraft 10. The aircraft 10 includes a fuselage 12 extending along a central axis 14 of the aircraft 10 from a nose 16 to a tail 18 of the aircraft 10. Wings 20 extend laterally from the fuselage 12 to provide lift for the aircraft 10. In some embodiments, the aircraft 10 may further include horizontal stabilizers 22 extending from the fuselage 12 rearward of the wings 20. The aircraft 10 may further include landing gear assemblies extendible for ground operations of the aircraft 10, for example, landing and takeoff of the aircraft 10. In some embodiments, the landing gear assemblies may include a nose landing gear assembly 24 and one or more main landing gear assemblies 26, which may be positioned at the wings 20 as shown in FIG. 1 or alternatively at the fuselage 12. While the embodiment of FIG. 1 includes a nose landing gear assembly 24 and two main landing gear assemblies 26, it is to be appreciated that in some embodiments, there may be other or additional landing gear assemblies, such as a tail landing gear assembly (not shown).

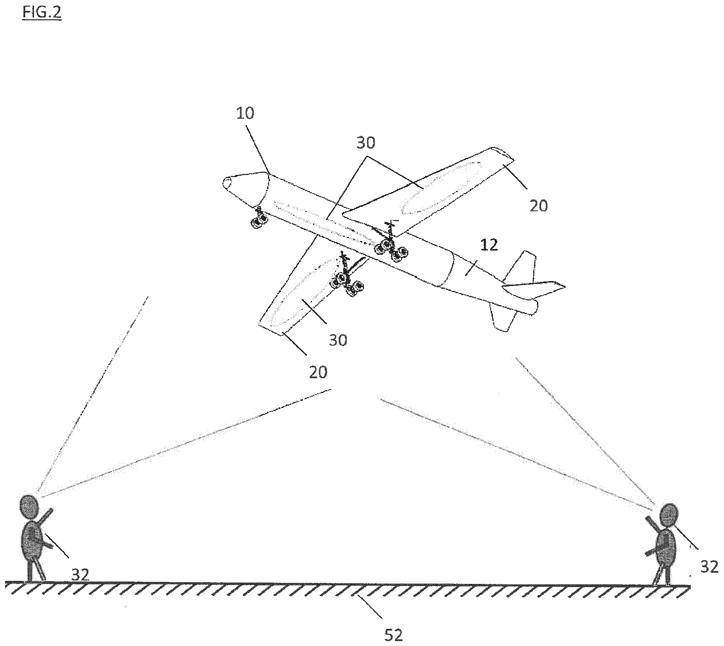

The aircraft 10 includes one or more projectors 28 configured to project one or more images 30 on surfaces of the aircraft 10, such as wing 20 surfaces or fuselage surfaces 12. As shown in FIG. 1 and in FIG. 2, the projectors 28 are located as to project images 30 on surfaces of an underside of the aircraft 10 so as to be viewable by an audience, represented at 32, located at ground level 52 during normal aircraft operations. While such a configuration is shown in FIGs. 1 and 2, it is to be appreciated that in other embodiments the projectors may be configured to project images anywhere on an outer, viewable surface of the aircraft 10.

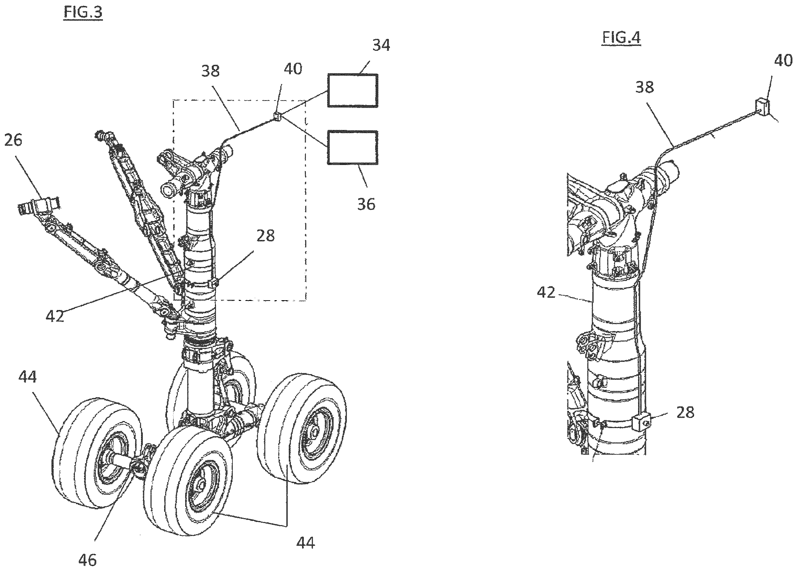

The images 30 displayed on the aircraft 10 surfaces may be static images, or alternatively may be dynamic images or video projections. The images 30 may depict, for example, commercial advertisement, flight operator identification, informational messages, or the like. In some embodiments, the projector 28 is a laser based system, which projects laser light into the selected aircraft 10 surfaces. In other embodiments, the projector 28 may utilize other technology such as a projection lamp, light emitting diode (LED) bulbs, or any such illumination technology. As best shown in FIG. 3, the projector 28 may be connected to a controller 34 and a power source 36 via an electrical harness 38 and a junction box 40 to control operation of the projector 28. The power source 36 may be an aircraft electrical system, or alternatively may be a battery operably connected to the projector 28 independent of the aircraft electrical system. Further, the projector 28 may be operably connected to the controller 34 via a wireless connection, for example, a WiFi connection to control the projection of images 30 by the projector 28.

The controller 34 is a programmable device configured to direct projection of selected images 30 by the projector 28. The image 30 display may be therefore changeable during operation of the aircraft 10 by communication with the controller 34 and via communication between the controller 34 and the projector 28. For example, a first image 30 may be displayed for a first time duration, then the projector 28 may be commanded to display a second image 30, different from the first image 30, for a second time duration that may be equal to or different from the first time duration. Further, projectors 28 may be utilized to display communicative images 30 in the event of loss of communication with air traffic controllers, or may display other messages in case of an emergency onboard the aircraft 10.

Referring now to FIGs. 3 and 4, illustrated is an embodiment where the projector 28 is mounted to a landing gear assembly, which may be, for example, a nose landing gear assembly 24 or a main landing gear assembly 26. The landing gear assembly includes a landing gear strut 42, with one or more landing gear wheels 44 rotatably connected to the landing gear strut 42 via a landing gear axle 46. The landing gear assembly is configured to be movable between an extended position (shown) and a retracted position (not shown). The extended position is utilized during ground operations of the aircraft 10, such as takeoff and landing, while the retracted position is utilized during other operations of the aircraft, for example, cruise flight. The projector 28 is secured to the landing gear strut 42 and moves with the landing gear assembly from the extended position to the retracted position. In some embodiments, operation of the projector 28 is tied to operation of the landing gear assembly such that when the landing gear assembly is in the extended position, the projector 28 is activated thus projecting an image 30 on the selected aircraft 10 surface. When the landing gear assembly is moved to the retracted position, the projector 28 is deactivated and no image 30 is displayed. Alternatively, operation of the projector 28 may be by flight crew command. Further, the flight crew may be able to override automatic operation of the projector 28 and/or be able to issue commands to the projector 28 to display a particular selected image 30. While illustrated in FIGs. 3 and 4 as being secured to the landing gear strut 42, the projector 28 may alternatively be secured to other components of the landing gear assembly. Further, in other examples, not covered by the claims, the projector 28 may be secured to the fuselage 12 or to other aircraft 10 components, such as an engine cowl or a landing gear door. Additionally, the projector 28 may be located at other aircraft locations, such as at a horizontal tail of the aircraft to project an image, such as an airline logo onto a vertical tail portion of the aircraft.

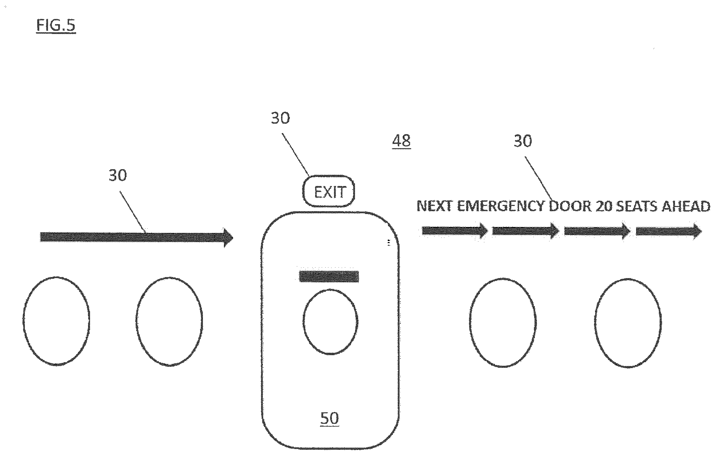

In other examples, not covered by the claims, such as shown in FIG. 5, projectors 28 may be positioned to project images 30 onto interior surfaces 48 of the aircraft 10. The interior surfaces 48 may include wall, floor or ceiling surfaces. As with images 30 displayed on exterior aircraft surfaces, the images 30 may be static or dynamic and may include commercial messages, informational messages or the like. The informational messages may include images 30 to indicate location of aircraft exits 50, or path to aircraft exits 50, and/or may include other instructional or safety related messages. Further, a traditional flight safety demonstration presently performed by aircraft personnel may be replace with a combination of projected images 30 and audio narration.

The projector 28 and image 30 system disclosed herein has many benefits including utilizing aircraft 10 surfaces not normally utilized for image display, with the capability of dynamically displaying images 30. Further, the projector 28 is programmable allowing for quick changeover of images 30, at a lower cost than existing paint systems.

While the present disclosure has been described in detail in connection with only a limited number of embodiments, it should be readily understood that the present disclosure is not limited to such disclosed embodiments. Additionally, while various embodiments have been described, it is to be understood that aspects of the present disclosure may include only some of the described embodiments. Accordingly, the present disclosure is not to be seen as limited by the foregoing description, but is only limited by the scope of the appended claims.

## Claims

1. An aircraft, comprising:
an aircraft body (10), the aircraft body (12) including one or more exterior surfaces; and
a projector (28) secured to a component of the aircraft, the projector configured to selectably project one or more images (30) on the one or more exterior surfaces; and **characterised by**
further comprising a controller (34) operably connected to the projector (28) via a wireless connection to selectably command projection of the one or more images (30) on the one or more exterior surfaces;
wherein the component is a landing gear strut of the aircraft; and
the controller is configured, such that operation of the projector is tied to operation of the landing gear strut such that when the landing gear strut is in an extended position the projector is automatically activated by the controller, thereby projecting the one or more images, and when the landing gear strut is moved to a retracted position the projector is automatically deactivated thereby not projecting the one or more images.

2. The aircraft of claim 1, wherein the image is one of a static image or a dynamic image.

3. The aircraft of any preceding claim, wherein the one or more exterior surfaces are viewable from ground level during normal flight operations of the aircraft.

4. The aircraft of any preceding claim, wherein the one or more exterior surfaces are one or more of wing surfaces (20) or fuselage (12) surfaces.

5. The aircraft of any preceding claim, wherein the projector (28) is operably connected to an aircraft electrical system.

6. The aircraft of any of claims 1 to 4, wherein the projector (28) is operably connected to a projector power source independent of an aircraft electrical system.

7. The aircraft of any preceding claim, wherein the one or more images (30) are changeable during operation of the aircraft.

8. The aircraft of any preceding claim, wherein the projector (28) is a laser projector.

9. A method of displaying a projected image on an aircraft surface, comprising:
moving a landing gear assembly (24) of the aircraft from a retracted position to an extended position;
automatically activating a projector (28) disposed at the landing gear assembly when the landing gear assembly is moved from the retracted position to the extended position; and
displaying a projected image (30) at the aircraft surface via activation of the projector; wherein the projector is selectably activated by a programmable controller operably connected to the projector via a wireless connection.

10. The method of claim 9, further comprising changing the projected image during operation of the aircraft.

## Patentansprüche

1. Luftfahrzeug, umfassend:
einen Luftfahrzeugkörper (10), wobei der Luftfahrzeugkörper (12) eine oder mehrere Außenflächen beinhaltet; und
einen Projektor (28), der an einem Bauteil des Luftfahrzeugs fixiert ist, wobei der Projektor so konfiguriert ist, dass er wählbar ein oder mehrere Bilder (30) auf die eine oder die mehreren Außenflächen projiziert; und **dadurch gekennzeichnet, dass** es
ferner eine Steuerung (34) umfasst, die wirksam mit dem Projektor (28) über eine drahtlose Verbindung verbunden ist, um wählbar eine Projektion des einen oder der mehreren Bilder (30) auf die eine oder die mehreren Außenflächen zu befehlen;
wobei das Bauteil eine Fahrwerksstrebe des Luftfahrzeugs ist; und
die Steuerung so konfiguriert ist, dass ein Betrieb des Projektors mit einem Betrieb der Fahrwerksstrebe verbunden ist, so dass, wenn sich die Fahrwerksstrebe in einer ausgefahrenen Position befindet, der Projektor automatisch durch die Steuerung aktiviert wird, wodurch er das eine oder die mehreren Bilder projiziert, und wenn die Fahrwerksstrebe auf eine eingefahrene Position bewegt wird, der Projektor automatisch deaktiviert wird, wodurch er das eine oder die mehreren Bilder nicht projiziert.

2. Luftfahrzeug nach Anspruch 1, wobei das Bild eines aus einem statischen Bild oder einem dynamischen Bild ist.

3. Luftfahrzeug nach einem der vorstehenden Ansprüche, wobei die eine oder die mehreren Außenflächen während normalen Flugbetriebs des Luftfahrzeugs von der Bodenhöhe aus zu sehen sind.

4. Luftfahrzeug nach einem der vorstehenden Ansprüche, wobei die eine oder die mehreren Außenflächen eines oder mehrere aus Flügelflächen (20) oder Flächen des Rumpfes (12) sind.

5. Luftfahrzeug nach einem der vorstehenden Ansprüche, wobei der Projektor (28) wirksam mit einer Elektrik des Luftfahrzeugs verbunden ist.

6. Luftfahrzeug nach einem der Ansprüche 1 bis 4, wobei der Projektor (28) wirksam mit einer Projektorstromquelle verbunden ist, die von einer Elektrik des Luftfahrzeugs unabhängig ist.

7. Luftfahrzeug nach einem der vorstehenden Ansprüche, wobei das eine oder die mehreren Bilder (30) während des Betriebs des Luftfahrzeugs gewechselt werden können.

8. Luftfahrzeug nach einem der vorstehenden Ansprüche, wobei der Projektor (28) ein Laserprojektor ist.

9. Verfahren zum Anzeigen eines projizierten Bildes auf einer Luftfahrzeugfläche, umfassend:
Bewegen einer Fahrwerksanordnung (24) des Luftfahrzeugs von einer eingefahrenen Position auf eine ausgefahrene Position;
automatisches Aktivieren eines Projektors (28), der an der Fahrwerksanordnung angeordnet ist, wenn die Fahrwerksanordnung von der eingefahrenen Position auf die ausgefahrene Position bewegt wird; und
Anzeigen eines projizierten Bildes (30) an der Luftfahrzeugfläche mittels Aktivierung des Projektors, wobei der Projektor wählbar durch eine programmierbare Steuerung aktiviert wird, die wirksam mit dem Projektor über eine drahtlose Verbindung verbunden ist.

10. Verfahren nach Anspruch 9, ferner das Wechseln des projizierten Bildes während des Betriebs des Luftfahrzeugs umfassend.

## Revendications

1. Aéronef, comprenant :
un corps d'aéronef (10), le corps d'aéronef (12) comportant une ou plusieurs surfaces extérieures ; et
un projecteur (28) fixé à un composant de l'aéronef, le projecteur étant configuré pour projeter de manière sélective une ou plusieurs images (30) sur les une ou plusieurs surfaces extérieures ; et **caractérisé en ce qu'**il
comprend en outre un dispositif de commande (34) fonctionnellement connecté au projecteur (28) par l'intermédiaire d'une connexion sans fil pour commander de manière sélective la projection des une ou plusieurs images (30) sur les une ou plusieurs surfaces extérieures ;
dans lequel le composant est une jambe de train d'atterrissage de l'aéronef ; et
le dispositif de commande est configuré de sorte que le fonctionnement du projecteur est lié au fonctionnement de la jambe de train d'atterrissage de sorte que lorsque la jambe de train d'atterrissage est dans une position étendue le projecteur est automatiquement activé par le dispositif de commande, projetant ainsi les une ou plusieurs images et, lorsque la jambe de train d'atterrissage est déplacée vers une position rétractée, le projecteur est automatiquement désactivé, ne projetant ainsi pas les une ou plusieurs images.

2. Aéronef selon la revendication 1, dans lequel l'image est l'une d'une image statique ou d'une image dynamique.

3. Aéronef selon une quelconque revendication précédente, dans lequel les une ou plusieurs surfaces extérieures sont visibles depuis le niveau du sol pendant les opérations de vol normales de l'aéronef.

4. Aéronef selon une quelconque revendication précédente, dans lequel les une ou plusieurs surfaces extérieures sont une ou plusieurs parmi des surfaces d'aile (20) ou des surfaces de fuselage (12).

5. Aéronef selon une quelconque revendication précédente, dans lequel le projecteur (28) est fonctionnellement connecté à un système électrique d'aéronef.

6. Aéronef selon l'une quelconque des revendications 1 à 4, dans lequel le projecteur (28) est fonctionnellement connecté à une source d'alimentation de projecteur indépendante d'un système électrique d'aéronef.

7. Aéronef selon une quelconque revendication précédente, dans lequel les une ou plusieurs images (30) sont modifiables pendant le fonctionnement de l'aéronef.

8. Aéronef selon une quelconque revendication précédente, dans lequel le projecteur (28) est un projecteur laser.

9. Procédé d'affichage d'une image projetée sur une surface d'aéronef, comprenant :
le déplacement d'un ensemble train d'atterrissage (24) de l'aéronef d'une position rétractée à une position étendue ;
l'activation automatique d'un projecteur (28) disposé au niveau de l'ensemble train d'atterrissage lorsque l'ensemble train d'atterrissage est déplacé de la position rétractée à la position étendue ; et
l'affichage d'une image projetée (30) au niveau de la surface d'aéronef par l'intermédiaire de l'activation du projecteur ; dans lequel le projecteur est activé de manière sélective par un dispositif de commande programmable fonctionnellement connecté au projecteur par l'intermédiaire d'une connexion sans fil.

10. Procédé selon la revendication 9, comprenant en outre le changement de l'image projetée pendant le fonctionnement de l'aéronef.
